# EUROPEAN PATENT SPECIFICATION

(11) **EP 3 328 074 B1**
(45) Date of publication and mention of the grant of the patent: **06.11.2019**
(21) Application number: 17170350.7
(22) Date of filing: 03.07.2012
(51) Int. Cl.: H04N 7/14, G08G 1/04, H04N 21/2187, H04N 7/18

(54) **SYSTEM AND METHOD FOR CAPTURING AND DELIVERING VIDEO IMAGES**
SYSTEM UND VERFAHREN ZUR ERFASSUNG UND AUSGABE VON VIDEOBILDERN
SYSTÈME ET PROCÉDÉ DE CAPTURE ET DE PRÉSENTATION D'IMAGES VIDÉO

(30) Priority: 12.07.2011 US 201161507086 P
(43) Date of publication of application: 30.05.2018
(62) Divisional of application: 12811027.7
(73) Proprietor: Solutions XYZ, LLC, Chula Vista, CA 91910 (US); Yova, Gregory, Chula Vista, CA 91910 (US); Trinh, Quang, San Diego, CA 92111 (US)
(72) Inventor: Yova, Gregory, Chula Vista, CA 91910 (US); Trinh, Quang, San Diego, CA 92111 (US)
(74) Representative: Simmons & Simmons

(56) References cited:
- EP-A2- 0 715 466
- WO-A1-01/13637
- JP-A- 2005 277 636

## Description

### RELATED APPLICATION

This application claims the benefit of U.S. Provisional Application serial number 61/507,086, filed July 12, 2011.

### FIELD OF INVENTION

The present disclosure relates generally to a system and method for providing computer network users video segments captured by a plurality of distributed cameras. More particularly, the present disclosure relates to a system and method for providing updated and accurate video segments of variable duration taken at varying time intervals of vehicular and pedestrian traffic at international border crossings and the like.

### BACKGROUND OF THE INVENTION

International border crossings to and from the United States and Canada and Mexico exceed 350,000,000 crossings per year. It is no surprise to those with family, friends, and work on both sides of an international border that delays can result in crossing times in excess of one hour for both vehicular and pedestrian traffic. Thus, there is a need for access to accurate and up-to-date border crossing conditions that would assist in the decision making process of when and where to cross an international border.

There exist a number of options available for obtaining vehicular and pedestrian traffic conditions. Television and radio stations typically report major highway and interstate traffic conditions but in the case of international border crossings, such reports usually occur only when there are excessive delays as a result of a reportable event. Likewise, websites and computer applications typically provide still shots or animated depictions of traffic conditions with color gradations indicating an estimate of the then current traffic flow. The information provided by these methods does not inform the user of the actual flow of vehicular and pedestrian traffic, data which is essential to determining the actual congestion and speed at which the traffic is flowing.

U.S. Patent No. 7,739,332 to Patton et al. is directed to a system and method for providing users live streaming video of traffic conditions from a plurality of cameras. The system and method employs image cache memories to reduce latency in providing the user requested video. Because this system and method is streaming live video, the bandwidth, server requirements, and costs for maintaining such a system can be prohibitive. In addition, streaming video is inherently problematic suffering from delayed starts, poor video quality, and long buffering interruptions. Streaming video systems must process incoming video every hour of every day and requires one extra bandwidth internet connection per shot per camera. Thus, each camera is a separate process with its own Internet Service Provider (ISP) fees. International application WO 01/13637 A1 is directed to a video management system which provides live digital video signals from a number of cameras to a number of client terminals, via a computer communications network, in real time. The system stores live video signals in response to a video recording trigger which may be either a schedule, an event, or an operator action.

Alternatively, commonly known surveillance video systems are widely available to provide live or recorded video images. These systems typically require video recording software that must record video 24 hours a day 7 days a week leading to potential disc problems at the remote server over time. Because the surveillance video system requires video recording software, implementation of the system and method of the present disclosure would necessitate functionality with the recording software leading to lengthy processing times and increased resource requirements. A need therefore exists for a reliable and affordable system for providing users near real-time video footage of current conditions.

### SUMMARY OF THE INVENTION

Various exemplary embodiments as described herein address the desirable aspects lacking in the relevant art and provide in various exemplary systematic embodiments a system and method directed towards providing a user reliable video segments of current conditions. To this end, the invention provides a computer-implemented method according to independent claim 1 and a system according to independent claim 13. Embodiments of the invention are described by the dependent claims. The embodiments or examples of the following description which are not covered by the appended claims are to be considered as not being part of the present invention.

### BRIEF DESCRIPTION OF THE DRAWINGS

The following drawings form part of the present specification and are included to further demonstrate certain aspects of the present invention. The invention can be better understood by reference to one or more of these drawings in combination with the detailed description of specific embodiments presented herein.
Figure 1 is a flowchart of a prior art streaming video system;
Figure 2 is a flowchart of an embodiment of the present disclosure depicting the interplay of the hardware devices of the system;
Figures 3A & 3B are a detailed flowchart of the disclosed method;
Figure 4 is a schematic of an embodiment of the present disclosure depicting the interplay of the hardware and software components of the system; and
Figure 5 depicts an exemplary block diagram of a server computer system.

### DETAILED DESCRIPTION OF THE INVENTION

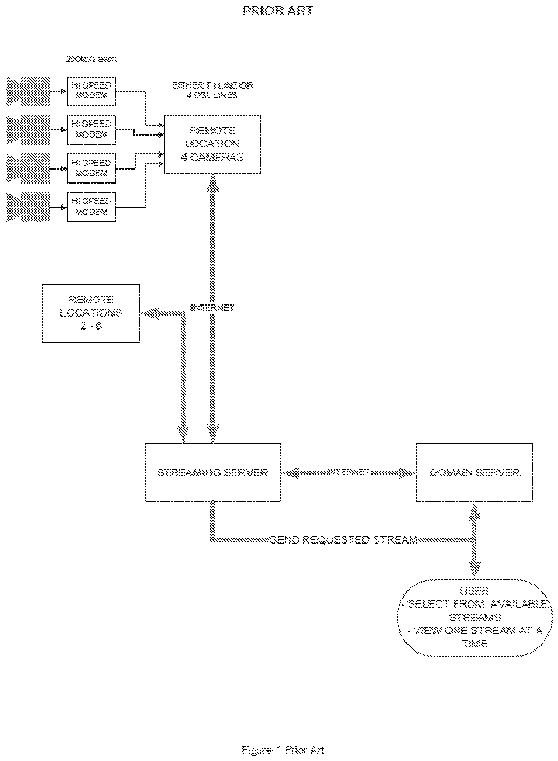

Referring to Figure 1, illustrative of a prior art system, a flowchart of a typical streaming video system is shown. The illustrative prior art system for streaming video requires one camera for each shot to be captured and each such camera requires its own high speed modem to connect to a streaming server. In this respect, each camera is a separate process requiring processing activity of the incoming video stream 24 hours a day 7 days a week. Thus, a significant amount of bandwidth is required to transmit streaming video from the camera to the user requesting the video. In turn, this extra bandwidth requirement increases the monthly ISP charges.

A budgetary comparative analysis of the illustrative prior art system and the presently disclosed system highlights the significant advantages of the presently disclosed system over the prior art. For example, in the presently disclosed system, each camera is capable of capturing multiple shots. Thus, in a representative, non-limiting example, one camera in the presently disclosed system is capable of capturing 4 different shots in essence doing the job of 4 cameras in the illustrative prior art system. Taking this example one step further, the representative monthly ISP charges for one camera in the presently disclosed system is approximately $40.00 per month. In the illustrative prior art example, due to increased bandwidth requirements, the representative monthly ISP charges for one camera is approximately $100.00 per month. Thus, following the previous example of one camera in the presently disclosed system versus 4 cameras in the illustrative prior art system, the monthly ISP charges are $40.00 and $400.00 respectively. In addition to the ISP base plan charge of $100.00 per month per camera, the illustrative prior art system also requires monthly per camera charges for processing and streaming equaling approximately $500.00. Summarizing the foregoing, for one camera in the presently disclosed system versus 4 cameras in the illustrative prior art system, the total monthly costs are $40.00 and $2400.00 respectively. Absent in this calculation are one time costs for installation and domain server or site lease costs. Of course installation costs would be higher for the illustrative prior art system due to increased hardware and camera requirements. Domain server and site lease costs are approximately equivalent in each system.

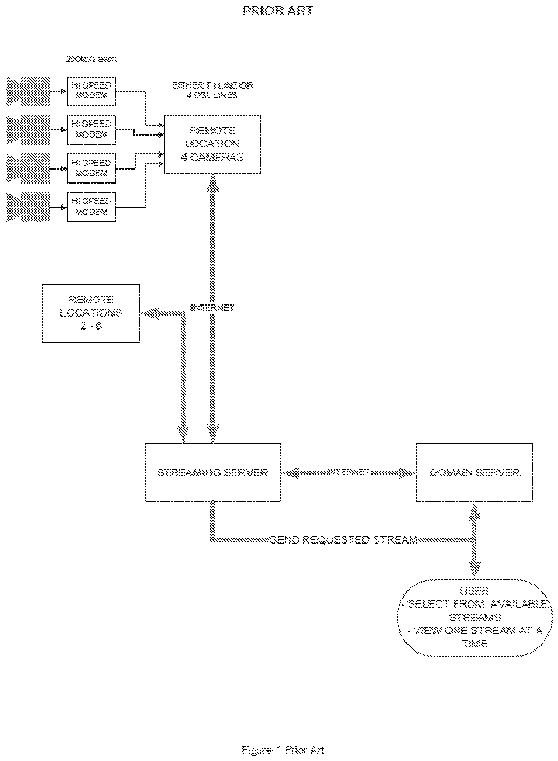

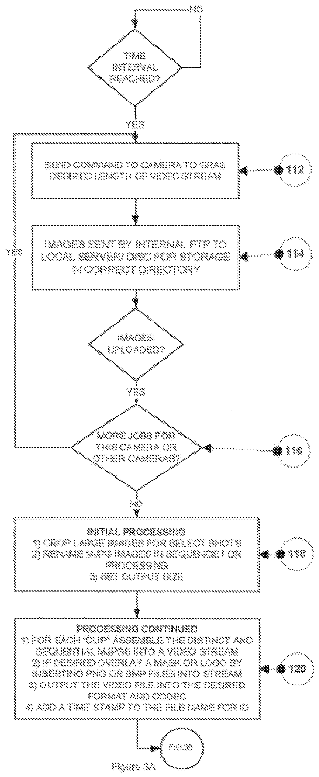

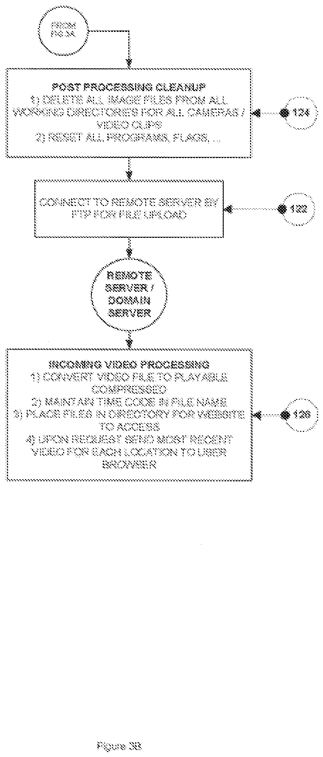

Referring now to Figure 2 and Figures 3A & B, illustrative embodiments depicting a system for providing video segments of current traffic conditions over a network and a flowchart illustrating the system process is shown. The system **100** comprises at least one camera **102**, at least one local remote server **106**, a computing system **104**, and a modem **108**. The at least one camera **102**, will be, for example, a fixed mount megapixel camera. For example, the at least one camera **102** can be a day/night, internet protocol Axis 223M camera or the like. The at least one camera **102** is in communication with at least one local remote server **106**. Forming a part of the at least one local remote server **102** is a computing system **104**. The computing system **104** will be a PC, Mac, or any embedded computing system such as a system on a chip. The computing system **104** manages the capturing of the video segment by the at least one camera **102** for a predetermined duration at predetermined time intervals.

The computing system **104** sends a command **112** to the at least one camera **102** to execute a preprogrammed specific routine. The at least one camera **102** can be triggered to execute the routine by an Application Programming Interface (API) command sent to the camera by Internet Protocol (IP) interface, by the camera's native interface, or by custom applications.

The at least one camera **102** can be set to execute various commands by programming events and send the corresponding event ID to the camera. In one embodiment, the camera is tasked to capture a ten second video segment every ten minutes. The duration and interval of the video segment will be for example, between five seconds and sixty seconds every five minutes to thirty minutes, preferably between five seconds and thirty seconds every five minutes to twenty minutes, and particularly preferably between five seconds and fifteen seconds every ten minutes to fifteen minutes. The final programmed duration and interval will depend on the end use application. For example, in monitoring border crossing traffic, a ten second clip taken every ten minutes to fifteen minutes is most useful for showing traffic congestion and offers enough information on traffic flow for the user to make an informed decision on when and where to cross.

In one embodiment, the at least one camera **102** sends the ten second video segment by internal File Transfer Protocol (FTP) **114** to the local remote server **106** and/or to a local storage hard drive (not shown) for storage in the correct directory in the recommended format determined by type of camera used in the system. By way of non-limiting example, the format may be a Motion JPEG format.

The computing system **104** will then continue to send commands **116** to the at least one camera **102** forming a part of the system **100**. The additional commands will be sent to any camera forming a part of the system **100** to capture additional shots or to cameras configured with Pan, Tilt, and Zoom (PTZ) capabilities enabling the camera to retrieve an unlimited number of different video segments due to the ability to see an entire hemisphere by mechanically changing the lens location and zoom.

If no more requests are made of the cameras, the video segment is subjected to initial processing **118**. This initial processing **118** will entail using an open source program or any appropriate compilation software to rename the video segment MJPEG in sequence based upon the requirements of the video compilation software used. Additionally, this program will be used to crop large shots to produce several video segments from one stream. Each cropped shot them becomes a separate video segment. The open source program then sets a final output size, which the video segment is forced into, for a standard viewer size.

Once cropped, numbered, and sized, the individual MJPEG's are assembled into a video stream using available open source programs or any other appropriate program **120**. Additionally, the selected program enables the overlay of a mask or logo and subsequently outputs the video file in the correct format using a selected CODEC with an added time code for identification at the domain server **120**. For example, the video format will be a Flash, SWF, MPEG-2, MPEG-4, H.263, H.264, and OGG-Theora or other suitable format.

A connection **122** is made to a remote domain server **110**, using a cable or DSL modem, dial-up modem or wireless internet connection. The processed video file is uploaded to the remote domain server **110** by way of FTP **122**. All image files are then deleted from all working directories for all cameras **124** forming a part of the system **100**.

At the domain server **110**, the video file is converted into suitable formats **126** for playback on multiple display and computing devices including desktop and laptop computers, mobile devices, and Apple® devices. By way of non-limiting example, the format will include for example, Flash, SWF, MPEG-2, MPEG-4, H.263, H.264, and OGG-Theora or other suitable format. The video file is place in the appropriate directory for access through a website **126**. Upon request by a user of the website, the domain server **110** sends the most recent video for the location and camera selected by the user.

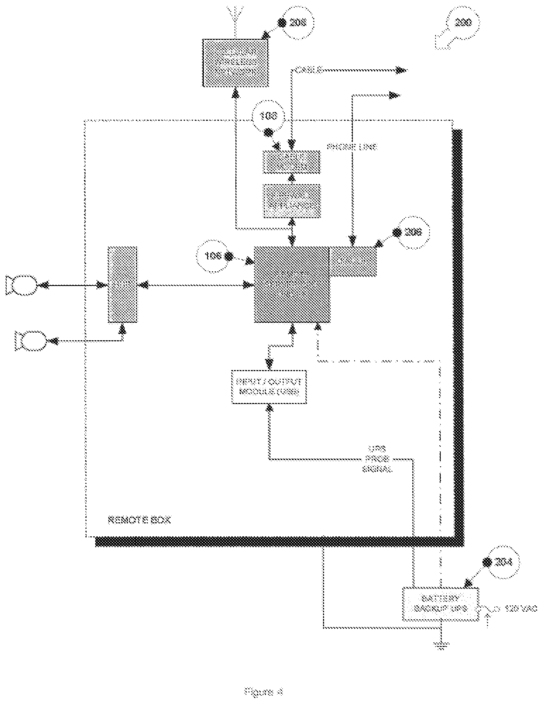

Referring now to Figure 4, an example of a remote box **200** containing the system 100 installed at a select location for providing video segments of current traffic conditions over a network is shown. In this embodiment, one of the at least one camera **102** will be designated as an on-site security camera. The security camera (not shown) will be for example, a motion activated camera configured to capture video of the remote box **200** installation and alert personnel if tampering of the remote box **200** occurs. Additionally, installed with the remote box **200** are tamper alerts, which will be in the form of a strobe light and buzzer (not shown). In the event of tampering with the remote box **200**, the strobe light and buzzer will be activated and an alert sent to the appropriate personnel.

The local remote server **106**, will be powered by 120 VAC and run through a substantial Uninterruptible Power Supply (UPS) **204**, which will be housed within the remote box **200** or separately and vented naturally or cooled by fan. In the event the power supply to the remote box **200** will fail, the UPS **204** is capable of supplying at least eight hours of power to the remote box **200**. The local remote server, as envisioned herein, can likewise be powered by 220 VAC as well as other voltages as known in the art.

The local remote server **106** is a networked server and connects to a network via a high speed cable or DSL modem **108**. Additionally, as a backup to the high speed modem, the local remote server **106** is capable of connection to a network via a dial-up modem **206** or through a cellular wireless connection **208**.

In the preferred embodiment, the system and method disclosed herein will be implemented as a combination of hardware and software. An example of a unit resulting from the combination is as depicted in Figure 4. The local remote server **106** includes a processor, a memory coupled to the processor and at least a single database operatively stored in the memory. A database is operatively loaded into the memory and includes instructions executable by the processor to send commands to the at least one camera **102** to capture video segments of a predetermined duration at predetermined time intervals. Additionally, the instructions executable by the processor can send additional requests to the cameras **102** for capturing additional shots such as cameras with PTZ capabilities. Finally, the instructions executable by the processor causes the deletion of all image files from all working directories upon successful upload of the video file to the domain server **110**.

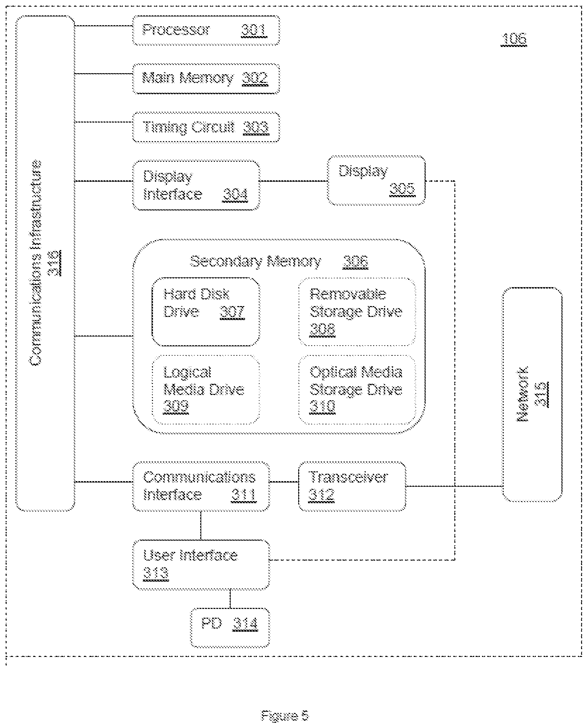

The system and method disclosed herein is accessed and operated through the internet via a website accessible by a user through a standard internet browser. Referring to Figure 5, a generalized block diagram of an exemplary computer system is depicted. The computer system is illustrative of a local remote server **106** and plurality of networked clients (not shown).

The local remote server **106** includes a communications infrastructure **316** used to transfer data and memory addresses where data files are to be found and control signals among the various components and subsystems associated with the local remote server **106**. As such, the communications infrastructure **316** provides the input/output (I/O) between and among the various components and subsystems associated with the local remote server **106**.

A processor **301** is provided to interpret and execute logical instructions stored in the memory **302**. One skilled in the art will appreciate that one or more processors **301** will be provided in various server implementations and/or in multi-core integrated processor packages.

The main memory **302** is the primary general purpose storage area for instructions and data to be processed by the processor **301**. The term "memory" is to be interpreted in its broadest sense and includes both main memory **302** and secondary memory **306**. A collective term of "computer readable storage medium," will be used to describe either or both the main memory **302** and secondary memory **306** as well.

Where applicable, references to the term "datastore" should be interpreted as an alternative to the terms "memory," and "computer readable storage medium." The memory includes the primary **302** and secondary memory **306**. A timing circuit **303** is provided to coordinate programmatic activities within the computer in near real time. The timing circuit **303** will be used as a watchdog timer, clock or a counter arrangement and may be separately programmable.

The processor **301**, main memory **302** and timing circuit **303** are directly coupled to the communications infrastructure **316**. A display interface **304** will be provided to drive a display **305** associated with the local remote server **106**. The display interface **304** is electrically coupled to the communications infrastructure **316** and provides signals to the display **305** for visually outputting both graphical displays and alphanumeric characters.

The display interface **304** includes a dedicated graphics processor and memory (not shown) to support the displaying of graphics intensive media. The display **305** will be of any type (e.g., cathode ray tube, gas plasma) but in most circumstances will usually be a solid state device such as liquid crystal display (LCD.) A secondary memory subsystem **306** is provided which houses retrievable data storage units such as a hard disk drive **307**, an optional removable storage drive **308**, an optional logical media storage drive **309** and an optional optical media storage drive **310**.

The term "computer readable medium" is another term for the tangible form of the computer program product comprising instructions executable by a processor. The computer readable medium includes, but is not limited to, non-volatile media, volatile media, and transmission media. Non-volatile media include, for example, optical or magnetic disks forming a part of secondary memory **306**. Volatile media include dynamic memory, such as main memory **302**. Transmission media include coaxial cables, copper wire, fiber optics and acoustic or light wave, such as those generated during radio frequency and infrared communications. Common forms of computer readable media to be used in practicing the invention include floppy disk, flexible disk, hard disk, magnetic tape, any other magnetic medium, a CD-ROM, DVD, any other optical medium, or any other medium from which a computer can read.

The removable storage drive **308** will be a replaceable hard drive, optical media storage drive or a solid state flash RAM device. The logical media storage drive **309** will include a flash RAM device, or an EEPROM encoded with instructions executable by the processor **301**. The optical storage media storage drive **310** includes the ability to read and write compact disk (CD) and digital video disk (DVD) media form factors.

A communications interface **311** subsystem is provided which allows for standardized electrical connection of peripheral devices to the communications infrastructure **316** including, PSI2, serial, parallel, USB, and Firewire™ connectivity ports.

For example, a communications network transceiver **312** and a user interface **313** will be electrically coupled to the communications infrastructure **316** via the communications interface **311**. The transceiver **312** facilitates the remote exchange of data and synchronizing signals between the local remote server **106** and other devices in network communications **315** with the local remote server **106**. The transceiver **312** is envisioned to be of a type normally associated with computer networks based on the various IEEE standards 802.x, where x denotes the various present and evolving wireless computing standards, for example IEEE 802.1 1; 802.1 1 a, b, g, n; WiMax IEEE 802.16 and WRANG IEEE 802.22.

Alternately, digital cellular communications formats compatible with for example GSM, 3G, CDMA, TDMA and evolving cellular communications standards. Both peer to peer (P2P) and client-server arrangements are envisioned for implementation of the various exemplary embodiments.

The local remote server **106** includes an operating system, the necessary hardware and software drivers necessary to fully utilize the devices coupled to the communications infrastructure **316** and at least an Internet browser. The operating system will include the various versions and derivations of Unix™, Microsoft Windows™, and Apple™ MAC 0s-X. The Internet browser may be of any common type which is compatible with the operating system installed on the local remote server **106**.

While this invention has been particularly shown and described with references to preferred embodiments thereof, it will be understood by those skilled in the art that various changes in form and details will be made therein without departing from the scope of the invention encompassed by the appended claims.

The inventions illustratively described herein can suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the future shown and described or any portion thereof, and it is recognized that various modifications are possible within the scope of the invention claimed. Thus, it should be understood that although the present invention has been specifically disclosed by preferred embodiments and optional features, modification and variation of the inventions herein disclosed can be performed by those skilled in the art, and that such modifications and variations are considered to be within the scope of the inventions disclosed herein. The inventions have been described broadly and generically herein. Each of the narrower species and subgeneric groupings falling within the scope of the generic disclosure also form part of these inventions. This includes the generic description of each invention with a proviso or negative limitation removing any subject matter from the genus, regardless of whether or not the excised materials specifically resided therein.

In addition, where features or aspects of an invention are described in terms of the Markush group, those schooled in the art will recognize that the invention is also thereby described in terms of any individual member or subgroup of members of the Markush group. It is also to be understood that the above description is intended to be illustrative and not restrictive. Many embodiments will be apparent to those of ordinary skill in the art from consideration of the specification and practice of the invention disclosed herein. It is intended that the specification and examples be considered as exemplary only, with a true scope of the invention being indicated by the claims.

Aspects of the invention are disclosed in the following numbered clauses:-
1. A computer implemented method of providing over a computer network a current image selected from at least one camera, the method comprising:
   the at least one camera receiving instructions to capture a video segment of a predetermined duration at predetermined time intervals;
   requesting the at least one camera to capture and send the video segment, according to the predetermined duration at the predetermined time intervals, to a local remote server;
   sending the video segment to a remote domain server; and
   transmitting the video segment, by the domain server, responsive to receiving a request for the video segment from a selected camera, to a video display unit, the video display unit displaying the requested video segment for viewing by a user.
2. The computer implemented method of clause 1, wherein the at least one camera is requested to capture video segments between 5 seconds and 60 seconds in duration every 5 minutes to 30 minutes.
3. The computer implemented method of clause 2, wherein the at least one camera is requested to capture video segments between 5 seconds and 30 seconds in duration every 5 minutes to 20 minutes.
4. The computer implemented method of clause 3, wherein the at least one camera is requested to capture video segments between 5 seconds and 15 seconds in duration every 10 minutes to 15 minutes.
5. The computer implemented method of clause 1, wherein the video segment sent to the local remote server is a Motion JPEG.
6. The computer implemented method of clause 1, further comprising:
   determining, after sending the video segment to the local remote server, whether additional requests for the at least one camera to capture and send additional video segments exists; and
   if an additional request exist, requesting the at least one camera to capture and send the video segment, according to the predetermined duration at the predetermined time intervals, to the local remote server.
7. The computer implemented method of clause 6, wherein the additional request is for the selected camera and is for any of a plurality of available shots capturable by the selected camera configured for pan, tilt, and zoom.
8. The computer implemented method of clause 1, wherein at the local remote server the video segment is processed by cropping, renaming the captured video segment in sequence for compilation into a video stream, and setting an output size.
9. The computer implemented method of clause 8, wherein a larger single image is cropped to output several separate and distinct video segments.
10. The computer implemented method of clause 9, wherein the video segment is further processed by compiling the captured video segment into a video stream, applying a mask or logo, encoding and formatting the video segment for transmission, and applying a date and time stamp to ensure the most recent video segment is displayed.
11. The computer implemented method of clause 10, wherein the video segment format is selected from one member of the group consisting of Flash, SWF, MPEG-2, MPEG-4, H.263, H.264, and OGG-Theora.
12. The computer implemented method of clause 1, further comprising deleting all video segments from the local remote server after sending the video segments to the domain server.
13. The computer implemented method of clause 1, wherein at the domain server the video segment is processed by converting to a file format for displaying selected from one member of the group consisting of Flash, SWF, MPEG-2, MPEG-4, H.264, and OGG-Theora.
14. A system for providing over a computer network a current image selected from at least one camera, the system comprising:
   at least one local remote server;
   the at least one local remote server having at least one camera associated therewith,
   the at least one camera configured to capture a video segment of a predetermined duration at predetermined time intervals, the local remote server configured to request the at least one camera to capture and send the video segment, according to the predetermined duration at the predetermined time intervals, to the local remote server;
   a domain server in communication with the at least one local remote server, the domain server receiving and storing coded and formatted video segments and transmitting, responsive to a request for the video segment, to a video display unit the coded and formatted video segments.
15. The system of clause 14, further comprising at least one device for connecting to the internet selected from at least one member of the group consisting of a cable modem, DSL modem, dial-up modem, and wireless router.
16. The system of clause 14, further comprising: a computer program product embodied in a tangible form comprising instructions executable by a processor, forming a part of the local remote server, causing the processor to:
   request the at least one camera to capture and send the video segment, according to the predetermined duration at the predetermined time intervals, to a local remote server;
   determine, after sending the video segment to the local remote server, whether additional requests for the at least one camera to capture and send additional video segments exists;
   if an additional request exist, requesting the at least one camera to capture and send the video segment, according to the predetermined duration at the predetermined time intervals, to the local remote server; and
   deleting from all directories, in the local remote server, video and image files from the at least one camera upon sending the video segment to the domain server.
17. A system for providing over a computer network a current image selected from at least one camera, the system comprising:
   at least one local remote server;
   the at least one local remote server having at least one camera associated therewith, the at least one camera configured to capture a video segment of a predetermined duration at predetermined time intervals, the local remote server configured to request the at least one camera to capture and send the video segment,
   according to the predetermined duration at the predetermined time intervals, to the local remote server;
   a computer program product embodied in a tangible form comprising instructions executable by a processor, forming a part of the local remote server, causing the processor to:
      request at least one camera to capture and send the video segment, according to the predetermined duration at the predetermined time intervals, to a local remote server;
      determine, after sending the video segment to the local remote server, whether additional requests for at least one camera to capture and send additional video segments exists;
      if an additional request exist, requesting the at least one camera to capture and send the video segment, according to the predetermined duration at the predetermined time intervals, to the local remote server; deleting from all directories, in the local remote server, video and image files from the at least one camera upon sending the video segment to the domain server; and
      a domain server in communication with the at least one local remote server, the domain server receiving and storing coded and formatted video segments and transmitting, responsive to a request for the video segment, to a video display unit the coded and formatted video segments.

## Claims

1. A computer-implemented method of providing over a computer network updated video segments , **characterised by**:
at least one camera receiving, from a local remote server, at least one command for executing a pre-programmed specific routine, the pre-programmed routine including instructions for the at least one camera to capture video of traffic for a duration of time at predetermined intervals;
the at least one camera executing the pre-programmed specific routine;
sending the captured video to the local remote server;
process the captured video to produce video segments indicative of a location of the video segment and of the camera that recorded the video segment;
if additional requests for the at least one camera to capture and send additional video segments exist; requesting the at least one camera to capture and send the video segments, according to the predetermined duration at the predetermined time intervals, to the local remote server;
transmitting the video segments to a remote domain server; and
upon request by a user of the domain server, transmitting to the user the most recent video segment for the location and camera requested by the user.

2. The computer-implemented method of claim 1, wherein the duration of time is between 5 seconds and 60 seconds and the predetermined interval is between 5 minutes and 30 minutes.

3. The computer-implemented method of claim 2, wherein the duration of time is between 5 seconds and 15 seconds and the predetermined interval is between 10 minutes and 15 minutes.

4. The computer-implemented method of claim 1, wherein the video sent to the local remote server is a Motion JPEG.

5. The computer-implemented method of claim 1, further comprising:
determining, after sending the captured video to the local remote server, whether further commands have been received; and
if an additional command exists, sending the additional command to the at least one camera.

6. The computer-implemented method of claim 5, wherein the additional command is for a selected camera and is for any of a plurality of available shots capturable by the selected camera configured for pan, tilt and zoom.

7. The computer-implemented method of claim 1, wherein at the local remote server the captured video is processed by cropping, renaming the captured video in sequence for a compilation into a video stream, and setting an output size.

8. The computer-implemented method of claim 7, wherein a larger single image is cropped to output several separate and distinct video segments.

9. The computer-implemented method of claim 8, wherein the captured video is further processed by compiling the captured video segments into a video stream, applying a mask or logo, encoding and formatting the video segments for transmission, and applying a date and time stamp to the video segments to ensure the most recent video segment is transmitted to the user.

10. The computer-implemented method of claim 9, wherein the video segment format is selected from one member of the group consisting of Flash, SWF, MPEG-2, MPEG-4, H.263, H.264 and OGG-Theora.

11. The computer-implemented method of claim 1, further comprising deleting all video segments from the local remote server after sending the video segments to the domain server.

12. The computer-implemented method of claim 1, wherein at the domain server, the video segment is processed by converting to a file format for displaying selected from one member of the group consisting of Flash, SWF, MPEG-2, MPEG-4, H.263, H.264 and OGG-Theora.

13. A system for providing over a computer network updated video segments, the system being **characterised by**:
at least one local remote server having at least one camera associated therewith, the at least one camera configured to capture video for a duration of time at predetermined intervals, the local remote server configured to send at least one command for executing a pre-programmed specific routine, the pre-programmed routine including instructions for the at least one camera to capture the video for a duration of time at predetermined intervals and send the video to the at least one local remote server;
the local remote server configured to process the video to produce video segments indicative of a location of the video segment and of the camera that recorded the video segment;
a domain server in communication with the at least one local remote server, the local remote server configured to transmit the video segments to the domain server;
wherein the domain server is configured to, upon request by a user of the domain server, transmit to the user the most recent video segment for the location and camera requested by the user.

14. The system of claim 13, further comprising at least one device for connecting to the internet selected from at least one member of the group consisting of a cable modem, DSL modem, dial-up modem, and wireless router.

15. The system of claim 13, further comprising:
a computer program product embodied in a tangible form comprising instructions executable by a processor, forming a part of the local remote server, causing the processor to:
send at least one command for executing the pre-programmed specific routine to the at least one camera to capture the video from the at least one camera for the duration of time at predetermined intervals;
determine, after sending the captured video to the at least one local remote server, whether any further commands exist;
if an additional command exists, sending the additional command to the at least one camera to capture video from the at least one camera for a duration of time at predetermined intervals;
process the captured video to produce video segments indicative of a location of the video segment and of the camera that recorded the video segment;
send the video segments from the at least one local remote server to the domain server, wherein the domain server is configured to, upon request by a user, transmit to the user the most recent video segment for the location and camera requested by the user.

## Patentansprüche

1. Computerimplementiertes Verfahren zum Bereitstellen aktualisierter Videosegmente über ein Computernetzwerk, **gekennzeichnet durch**:
mindestens eine Kamera, die von einem lokalen Fernserver mindestens einen Befehl zum Ausführen einer vorprogrammierten spezifischen Routine empfängt, wobei die vorprogrammierte Routine Anweisungen für die mindestens eine Kamera beinhaltet, um Video von Verkehr für eine Zeitdauer bei vorbestimmten Intervallen aufzunehmen;
die mindestens eine Kamera, die die vorprogrammierte spezifische Routine ausführt;
Senden des aufgenommenen Videos an den lokalen Fernserver;
Verarbeiten des aufgenommenen Videos, um Videosegmente zu erzeugen, die eine Stelle des Videosegments und die Kamera, die das Videosegment aufgezeichnet hat, angeben;
falls zusätzliche Anfragen für die mindestens eine Kamera, zusätzliche Videosegmente aufzunehmen und zu senden, existieren; Anfragen der mindestens einen Kamera, die Videosegmente gemäß der vorbestimmten Dauer bei den vorbestimmten Zeitintervallen aufzunehmen und an den lokalen Fernserver zu senden;
Übertragen der Videosegmente an einen Ferndomänenserver; und
nach Anfragen durch einen Anwender des Domänenservers, Übertragen des aktuellsten Videosegments für die Stelle und Kamera, die vom Anwender angefragt wurde, an den Anwender.

2. Computerimplementiertes Verfahren nach Anspruch 1, wobei die Zeitdauer zwischen 5 Sekunden und 60 Sekunden und das vorbestimmte Intervall zwischen 5 Minuten und 30 Minuten ist.

3. Computerimplementiertes Verfahren nach Anspruch 2, wobei die Zeitdauer zwischen 5 Sekunden und 15 Sekunden und das vorbestimmte Intervall zwischen 10 Minuten und 15 Minuten ist.

4. Computerimplementiertes Verfahren nach Anspruch 1, wobei das Video, das an den lokalen Fernserver gesendet wird, ein Motion JPEG ist.

5. Computerimplementiertes Verfahren nach Anspruch 1, weiter umfassend:
Ermitteln, nach Senden des aufgenommenen Videos an den lokalen Fernserver, ob weitere Befehle empfangen wurden; und
falls ein zusätzlicher Befehl existiert, Senden des zusätzlichen Befehls an die mindestens eine Kamera.

6. Computerimplementiertes Verfahren nach Anspruch 5, wobei der zusätzliche Befehl für eine ausgewählte Kamera ist und für irgendeine einer Vielzahl von verfügbaren Aufnahmen ist, die von der ausgewählten Kamera aufgenommen werden kann, die für Schwenk, Neigung und Zoom konfiguriert ist.

7. Computerimplementiertes Verfahren nach Anspruch 1, wobei beim lokalen Fernserver das aufgenommene Video durch Cropping, Umbenennen des aufgenommenen Videos in Sequenz für eine Kompilation in einen Videostream und Einstellen einer Ausgangsgröße verarbeitet wird.

8. Computerimplementiertes Verfahren nach Anspruch 7, wobei ein größeres Einzelbild gecroppt wird, um mehrere separate und unterschiedliche Videosegmente auszugeben.

9. Computerimplementiertes Verfahren nach Anspruch 8, wobei das aufgenommene Video weiter durch Kompilieren der aufgenommenen Videosegmente in einen Videostream, Anwenden einer Maske oder eines Logos, Codieren und Formatieren der Videosegmente für Übertragung und Anwenden eines Datums- und Zeitstempels auf die Videosegmente, um sicherzustellen, dass das aktuellste Videosegment an den Anwender übertragen wird, verarbeitet wird.

10. Computerimplementiertes Verfahren nach Anspruch 9, wobei das Videosegmentformat aus einem Mitglied der Gruppe ausgewählt ist, bestehend aus Flash, SWF, MPEG-2, MPEG-4, H.263, H.264 und OGG-Theora.

11. Computerimplementiertes Verfahren nach Anspruch 1, weiter umfassend Löschen aller Videosegmente vom lokalen Fernserver, nach Senden der Videosegmente an den Domänenserver.

12. Computerimplementiertes Verfahren nach Anspruch 1, wobei beim Domänenserver das Videosegment durch Konvertieren zu einem Dateiformat zum Anzeigen, ausgewählt von einem Mitglied der Gruppe, bestehend aus Flash, SWF, MPEG-2, MPEG-4, H.263, H.264 und OGG-Theora, verarbeitet wird.

13. System zum Bereitstellen aktualisierter Videosegmente über ein Computernetzwerk, das System **gekennzeichnet durch**:
mindestens einen lokalen Fernserver mit mindestens einer Kamera, die diesem zugehörig ist, wobei die mindestens eine Kamera konfiguriert ist, Video für eine Zeitdauer bei vorbestimmten Intervallen aufzunehmen, wobei der lokale Fernserver konfiguriert ist, mindestens einen Befehl zum Ausführen einer vorprogrammierten spezifischen Routine zu senden, wobei die vorprogrammierte Routine Anweisungen für die mindestens eine Kamera beinhaltet, das Video für eine Zeitdauer bei vorbestimmten Intervallen aufzunehmen und das Video an den mindestens einen lokalen Fernserver zu senden;
der lokale Fernserver konfiguriert ist, das Video zu verarbeiten, um Videosegmente zu erzeugen, die eine Stelle des Videosegments und die Kamera, die das Videosegment aufgenommen hat, angeben;
einen Domänenserver in Kommunikation mit dem mindestens einen lokalen Fernserver, wobei der lokale Fernserver konfiguriert ist, die Videosegmente an den Domänenserver zu übertragen;
wobei der Domänenserver konfiguriert ist, nach Anfrage durch einen Anwender des Domänenservers, an den Anwender das aktuellste Videosegment für die Stelle und Kamera, die vom Anwender angefragt werden, zu übertragen.

14. System nach Anspruch 13, weiter umfassend mindestens eine Vorrichtung zum Verbinden mit dem Internet, die von mindestens einem Mitglied der Gruppe ausgewählt ist, bestehend aus einem Kabelmodem, DSL-Modem, Einwahlmodem und drahtlosen Router.

15. System nach Anspruch 13, weiter umfassend:
ein Computerprogrammprodukt, das in einer greifbaren Form ausgestaltet ist, das Anweisungen umfasst, die von einem Prozessor ausgeführt werden können, der einen Teil des lokalen Fernservers bildet, und den Prozessor veranlassen zum:
Senden mindestens eines Befehls zum Ausführen der vorprogrammierten spezifischen Routine an die mindestens eine Kamera, um das Video von der mindestens einen Kamera für die Zeitdauer bei vorbestimmten Intervallen aufzunehmen;
Ermitteln, nach Senden des aufgenommenen Videos an den mindestens einen lokalen Fernserver, ob irgendwelche weiteren Befehle existieren;
falls ein zusätzlicher Befehl existiert, Senden des zusätzlichen Befehls an die mindestens eine Kamera, um Video von der mindestens einen Kamera für eine Zeitdauer bei vorbestimmten Intervallen aufzunehmen;
Verarbeiten des aufgenommenen Videos, um Videosegmente zu erzeugen, die eine Stelle des Videosegments und die Kamera, die das Videosegment aufgezeichnet hat, angeben;
Senden der Videosegmente von dem mindestens einen lokalen Fernserver an den Domänenserver, wobei der Domänenserver konfiguriert ist, nach Anfrage durch einen Anwender, an den Anwender das aktuellste Videosegment für die Stelle und Kamera, die vom Anwender angefragt werden, zu übertragen.

## Revendications

1. Procédé implémenté par ordinateur pour fournir sur un réseau informatique des segments vidéo mis à jour, **caractérisé par** :
au moins une caméra recevant, à partir d'un serveur local distant, au moins une commande d'exécution d'une routine spécifique préprogrammée, la routine préprogrammée incluant des instructions pour que la au moins une caméra capture une vidéo de trafic pendant une durée de temps à des intervalles prédéterminés ;
la au moins une caméra exécutant la routine spécifique préprogrammée ;
l'envoi de la vidéo capturée au serveur distant local ;
le traitement de la vidéo capturée pour produire des segments vidéo indiquant une position du segment vidéo et de la caméra qui a enregistré le segment vidéo ;
s'il existe des demandes supplémentaires pour que la au moins une caméra capture et envoie des segments vidéo supplémentaires ; la demande à la au moins une caméra de capturer et d'envoyer les segments vidéo, conformément à la durée prédéterminée aux intervalles de temps prédéterminés, au serveur distant local ;
la transmission des segments vidéo à un serveur de domaine distant ; et
lors d'une demande par un utilisateur du serveur de domaine, la transmission à l'utilisateur du segment vidéo le plus récent pour la position et la caméra demandées par l'utilisateur.

2. Procédé implémenté par ordinateur selon la revendication 1, dans lequel la durée de temps est comprise entre 5 secondes et 60 secondes et l'intervalle prédéterminé est compris entre 5 minutes et 30 minutes.

3. Procédé implémenté par ordinateur selon la revendication 2, dans lequel la durée de temps est comprise entre 5 secondes et 15 secondes et l'intervalle prédéterminé est compris entre 10 minutes et 15 minutes.

4. Procédé implémenté par ordinateur selon la revendication 1, dans lequel la vidéo envoyée au serveur distant local est un Motion JPEG.

5. Procédé implémenté par ordinateur selon la revendication 1, comprenant en outre :
la détermination, après l'envoi de la vidéo capturée au serveur distant local, si d'autres commandes ont été reçues ; et
si une commande supplémentaire existe, l'envoi de la commande supplémentaire à la au moins une caméra.

6. Procédé implémenté par ordinateur selon la revendication 5, dans lequel la commande supplémentaire est destinée à une caméra sélectionnée et destinée à l'une quelconque d'une pluralité de prises de vues disponibles pouvant être capturées par la caméra sélectionnée configurée pour un panoramique, une inclinaison et un zoom.

7. Procédé implémenté par ordinateur selon la revendication 1, dans lequel, au niveau du serveur distant local, la vidéo capturée est traitée en recadrant, renommant la vidéo capturée en séquence pour une compilation en un flux vidéo, et établissant une taille de sortie.

8. Procédé implémenté par ordinateur selon la revendication 7, dans lequel une image unique plus grande est recadrée pour produire plusieurs segments vidéo séparés et distincts.

9. Procédé implémenté par ordinateur selon la revendication 8, dans lequel la vidéo capturée est en outre traitée en compilant les segments vidéo capturés en un flux vidéo, en appliquant un masque ou un logo, en codant et en formatant les segments vidéo pour une transmission, et en appliquant une date et une heure aux segments vidéo pour s'assurer que le segment vidéo le plus récent est transmis à l'utilisateur.

10. Procédé implémenté par ordinateur selon la revendication 9, dans lequel le format de segment vidéo est choisi parmi un membre du groupe constitué de Flash, SWF, MPEG-2, MPEG-4, H.263, H.264 et OGG-Theora.

11. Procédé implémenté par ordinateur selon la revendication 1, comprenant en outre la suppression de tous les segments vidéo du serveur distant local après l'envoi des segments vidéo au serveur de domaine.

12. Procédé implémenté par ordinateur selon la revendication 1, dans lequel, au niveau du serveur de domaine, le segment vidéo est traité par conversion en un format de fichier à afficher sélectionné parmi un membre du groupe constitué de Flash, SWF, MPEG-2, MPEG-4, H.263, H.264 et OGG-Theora.

13. Système pour fournir sur un réseau informatique des segments vidéo mis à jour, le système étant **caractérisé par** :
au moins un serveur distant local ayant au moins une caméra associée à celui-ci, la au moins une caméra étant configurée pour capturer une vidéo pendant une durée de temps à des intervalles prédéterminés, le serveur distant local étant configuré pour envoyer au moins une commande pour l'exécution d'une routine spécifique préprogrammée, la routine préprogrammée incluant des instructions pour que la au moins une caméra capture la vidéo pendant une durée de temps à des intervalles prédéterminés et envoie la vidéo au au moins un serveur distant local ;
le serveur distant local étant configuré pour traiter la vidéo afin de produire des segments vidéo indicatifs d'une position du segment vidéo et de la caméra vidéo qui a enregistré le segment vidéo ;
un serveur de domaine en communication avec le au moins un serveur distant local, le serveur distant local étant configuré pour transmettre les segments vidéo au serveur de domaine ;
dans lequel le serveur de domaine est configuré pour, lors d'une demande par un utilisateur du serveur de domaine, transmettre à l'utilisateur le segment vidéo le plus récent pour la position et la caméra demandées par l'utilisateur.

14. Système selon la revendication 13, comprenant en outre au moins un dispositif de connexion à l'Internet sélectionné parmi au moins un membre du groupe constitué d'un modem câble, d'un modem DSL, d'un modem commuté, et d'un routeur sans fil.

15. Système selon la revendication 13, comprenant en outre :
un produit programme d'ordinateur incarnée sous une forme tangible comprenant des instructions exécutables par un processeur, faisant partie du serveur distant local, amenant le processeur à :
envoyer au moins une commande d'exécution de la routine spécifique préprogrammée à la au moins une caméra pour capturer la vidéo à partir de la au moins une caméra pendant la durée de temps à des intervalles prédéterminés ;
déterminer, après avoir envoyé la vidéo capturée au au moins un serveur local distant, s'il existe d'autres quelconques commandes ;
si une commande supplémentaire existe, envoyer la commande supplémentaire à la au moins une caméra pour capturer une vidéo par la au moins une caméra pendant une durée de temps à des intervalles prédéterminés ;
traiter la vidéo capturée pour produire des segments vidéo indiquant une position du segment vidéo et de la caméra vidéo qui a enregistré le segment vidéo ;
envoyer les segments vidéo depuis le au moins un serveur distant local au serveur de domaine, dans lequel le serveur de domaine est configuré pour, lors d'une demande par un utilisateur, transmettre à l'utilisateur le segment vidéo le plus récent pour la position et la caméra demandées par l'utilisateur.
